# EUROPÄISCHE PATENTSCHRIFT

(11) **EP 0 485 820 B1**
(45) Veröffentlichungstag und Bekanntmachung des Hinweises auf die Patenterteilung: **21.08.1996**
(21) Anmeldenummer: 91118679.9
(22) Anmeldetag: 01.11.1991
(51) Int. Cl.: C08F 4/602, C08F 10/00

(54) **Verfahren zur Herstellung eines Olefinpolymers**
Process for preparing olefin polymers
Procédé de préparation de polymères oléfiniques

(30) Priorität: 12.11.1990 DE 4035885
(43) Veröffentlichungstag der Anmeldung: 20.05.1992
(60) Teilanmeldung: 96100539.4
(73) Patentinhaber: HOECHST AKTIENGESELLSCHAFT, 65926 Frankfurt am Main (DE)
(72) Erfinder: Winter, Andreas, Dr., W-6246 Glashütten (DE); Antberg, Martin, Dr., W-6238 Hofheim am Taunus (DE); Spaleck, Walter, Dr., W-6237 Liederbach (DE); Rohrmann, Jürgen, Dr., W-6233 Kelkheim (Taunus) (DE); Dolle, Volker, Dr., W-6233 Kelkheim (Taunus) (DE)

(56) Entgegenhaltungen:
- EP-A- 0 384 264

## Beschreibung

Die Erfindung bezieht sich auf ein Verfahren zur Herstellung von Olefinpolymeren mit enger Molmassenverteilung und hoher Isotaktizität.

Aus der Literatur sind lösliche Metallocenverbindungen auf Basis von Bis(cyclopentadienyl)zirkon-alkyl bzw. -halogenid in Kombination mit oligomeren Aluminoxanen bekannt. Mit diesen Systemen können Ethylen und Propylen mit mäßiger Aktivität polymerisiert werden, man erhält jedoch kein isotaktisches Polypropylen. Die so hergestellten Polypropylene sind amorph und haben deshalb keinen definierten Schmelzpunkt.

Weiterhin ist von dem Katalysatorsystem Bis(cyclopentadienyl)titandiphenyl/Methylaluminoxan bekannt, daß es Propylen in Stereoblockpolymere, d.h. Polypropylen mit mehr oder weniger langen isotaktischen Sequenzen, umzuwandeln vermag (vgl. US-PS 4,522,982). Deutliche Nachteile dieses Katalysatorsystems sind die großtechnisch irrelevanten Polymerisationstemperaturen (0 °C bis -60 °C), die völlig unbefriedigenden Katalysatoraktivitäten und die im Vergleich zu großtechnisch mit Heterogenkatalysatorsystemen auf MgCl₂/TiCl₄-Katalysatorbasis hergestelltem Polypropylen zu niedrig liegenden Schmelzpunkte der Polypropylenprodukte.

Die Herstellung von isotaktischem Polypropylen gelingt mit Hilfe des Ethylen-bis(4,5,6,7-tetrahydro-1-indenyl)zirkondichlorids zusammen mit einem Aluminoxan in einer Suspensionspolymerisation (vgl. EP-A 185 918). Das Polymer besitzt eine enge Molmassenverteilung, was für bestimmte Anwendungen, beispielsweise für den Hochleistungsspritzguß, von Vorteil ist.

Neben einer Reihe anderer Mängel wie zu niedrige Metallocenaktivitäten oder schlechte Produktmorphologie liegen die Schmelzpunkte auch dieser Polypropylene zu niedrig, d.h. ihre Kristallinität und somit ihre Härte sind für einen Einsatz des Polymers als Konstruktionswerkstoff noch zu gering.

Es wurde auch eine spezielle Voraktivierungsmethode des Metallocens mit einem Aluminoxan vorgeschlagen, welche zu einer beachtlichen Steigerung der Aktivität des Katalysatorsystems und zu einer deutlichen Verbesserung der Kornmorphologie des Polymeren führt (vgl. DE -A-37 26 067).

Eine entscheidende Verbesserung der Schmelzpunkte, Kristallinitäten und Härten der so hergestellten Polymere ist dadurch aber nicht zu erreichen.

Diese Eigenschaften besitzen jedoch für den Einsatz von Polymeren als Konstruktionswerkstoffe (z.B. Großhohlkörper, Rohre, Formteile) große Bedeutung.

Es bestand die Aufgabe, ein Verfahren und einen Katalysator zu finden, mittels dessen bei hoher Aktivität Polymere enger Molmassendispersität und hoher Stereospezifität mit höherem Schmelzpunkt und somit höherer Kristallinität und höherer Härte hergestellt werden können.

Es wurde gefunden, daß unter Verwendung von in der Ligandsphäre in bestimmter Weise substituierten, verbrückten Metallocensystemen diese Aufgabe gelöst werden kann.

Die Erfindung betrifft somit ein Verfahren zur Herstellung eines Olefinpolymers durch Polymerisation oder Copolymerisation eines Olefins der Formel R^{a}-CH=CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, welcher aus einem Metallocen als Übergangsmetallverbindung und einem Aluminoxan, bevorzugt der Formel (II) 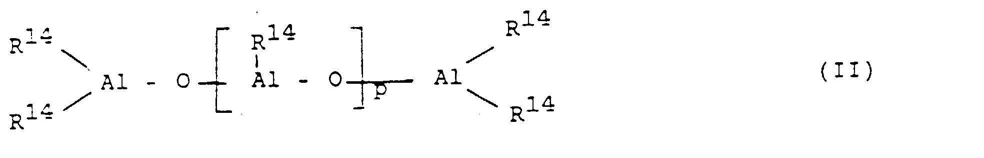 für den linearen Typ und/oder der Formel III 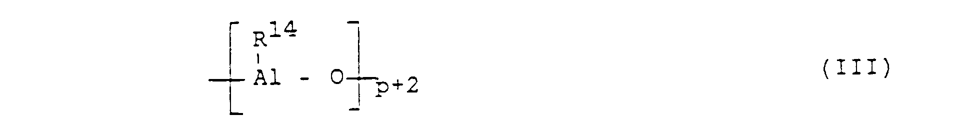 für den cyclischen Typ,
wobei in den Formeln (II) und (III) die Reste R¹⁴ gleich oder verschieden sein können und eine C₁-C₆-Alkylgruppe, eine C₆-C₁₈-Arylgruppe oder Wasserstoff bedeuten und p eine ganze Zahl von 2 bis 50 bedeutet, und/oder einer Salzartigen Verbindung der Formel RₓNH₄₋ₓBR'₄ oder der Formel R₃PHBR'₄, worin x = 1,2 oder 3 ist, R=Alkyl oder Aryl gleich oder verschieden sind und R'=Aryl sind, das auch fluoriert oder teilfluoriert sein kann, besteht, dadurch gekennzeichnet, daß das Metallocen eine Verbindung der Formel I ist, 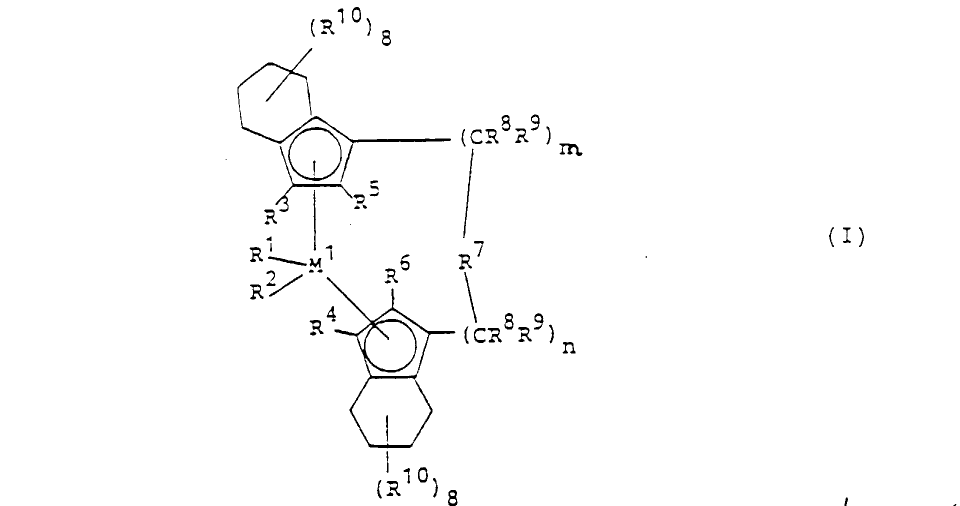
- M¹: ein Metall der Gruppe IVb, Vb oder VIb des Periodensystems ist,
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylqruppe oder ein Halogenatom bedeuten,
- R³ und R⁴: gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁵, -SR¹⁵, -OSiR₃¹⁵, -SiR₃¹⁵ oder -PR₂¹⁵-Rest bedeuten, worin R¹⁵ ein Halogenatom, eine C₁-C₁₀-Alkylgruppe oder eine C₆-C₁₀-Arylgruppe ist,
- R⁵ und R⁶: gleich oder verschieden sind und die für R³ und R⁴ genannte Bedeutung haben, mit der Maßgabe, daß R⁵ und R⁶ nicht Wasserstoff sind,
- R⁷: 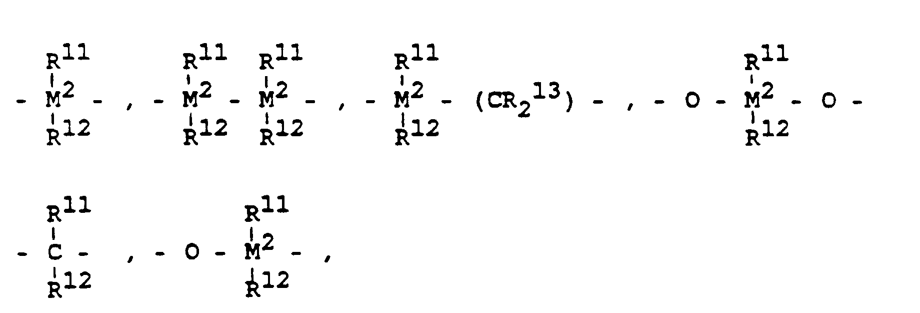 =BR¹¹, =AlR¹¹, -Ge-, -Sn-, -O-, -S-, =SO, =SO₂, =NR¹¹, =CO, =PR¹¹ oder =P(O)R¹¹ ist,
wobei
- R¹¹, R¹² und R¹³: gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
- M²: Silizium, Germanium oder Zinn ist,
- R⁸ und R⁹: gleich oder verschieden sind und die für R¹¹ genannte Bedeutung haben,
m und n gleich oder verschieden sind und null, 1 oder 2 sind, wobei m plus n null, 1 oder 2 ist, und
die Reste R¹⁰ gleich oder verschieden sind und die für R¹¹, R¹² und R¹³ genannte Bedeutung haben.

Alkyl steht für geradkettiges oder verzweigtes Alkyl. Halogen (halogeniert) bedeutet Fluor, Chlor, Brom oder Jod, bevorzugt Fluor oder Chlor.

Der für das erfindungsgemäße Verfahren zu verwendende Katalysator besteht aus einem Aluminoxan und/oder einer SalzartigenVerbindung der Formel RₓNH₄₋ₓBr'₄ oder der Formel R₃ PHBR'₄, worin x=1,2 oder 3 ist, R = Alkyl oder Aryl gleich oder verschieden sind und R' = Aryl sind, das auch fluoriert oder teilfluoriert sein kann, und einem Metallocen der Formel I

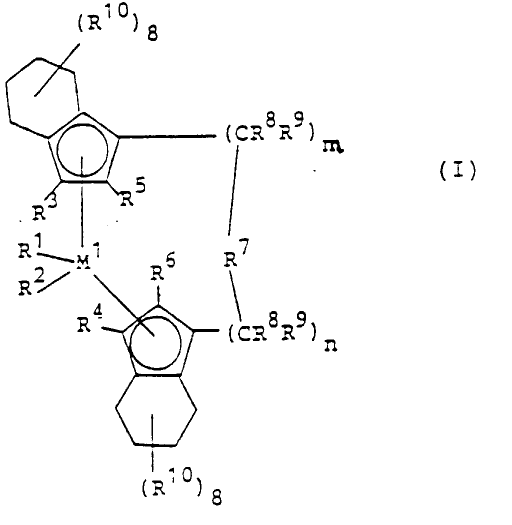

In Formel I ist M¹ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon, Hafnium und Titan.

R¹ und R² sind gleich oder verschieden und bedeuten ein Wasserstoffatom, eine C₁-C₁₀-, vorzugsweise
C₁-C₃-Alkylgruppe, eine C₁-C₁₀-, vorzugsweise
C₁-C₃-Alkoxygruppe, eine C₆-C₁₀-, vorzugsweise
C₆-C₈-Arylgruppe, eine C₆-C₁₀-, vorzugsweise
C₆-C₈-Aryloxygruppe, eine C₂-C₁₀-, vorzugsweise
C₂-C₄-Alkenylgruppe, eine C₇-C₄₀-, vorzugsweise
C₇-C₁₀-Arylalkylgruppe, eine C₇-C₄₀-, vorzugsweise
C₇-C₁₂-Alkylarylgruppe, eine C₈-C₄₀-, vorzugsweise
C₈-C₁₂-Arylalkenylgruppe oder ein Halogenatom, vorzugsweise Chlor.

R³ und R⁴ sind gleich oder verschieden und bedeuten ein Wasserstoffatom, ein Halogenatom, bevorzugt ein Fluor-, Chlor- oder Bromatom, eine C₁-C₁₀-, vorzugsweise C₁-C₄-Alkylgruppe, die halogeniert sein kann, eine C₆-C₁₀-, vorzugsweise C₆-C₈-Arylgruppe, einen -NR₂¹⁵, -SR¹⁵, -OSiR₃¹⁵, -SiR₃¹⁵, oder -PR₂¹⁵-Rest, worin R¹⁵ ein Halogenatom, vorzugsweise Chloratom, oder eine C₁-C₁₀-, vorzugsweise C₁-C₃-Alkylgruppe oder C₆-C₁₀-, vorzugsweise C₆-C₈-Arylgruppe ist. Besonders bevorzugt sind R³ und R⁴ Wasserstoff.

R⁵ und R⁶ sind gleich oder verschieden, bevorzugt gleich, und haben die für R³ und R⁴ beschriebene Bedeutung, mit der Maßgabe, daß R⁵ und R⁶ nicht Wasserstoff sein dürfen. Bevorzugt sind R⁵ und R⁶ (C₁-C₄)-Alkyl, das halogeniert sein kann, wie Methyl, Ethyl, Propyl, Isopropyl, Butyl, Isobutyl oder Trifluormethyl, insbesondere Methyl.

R⁷ ist 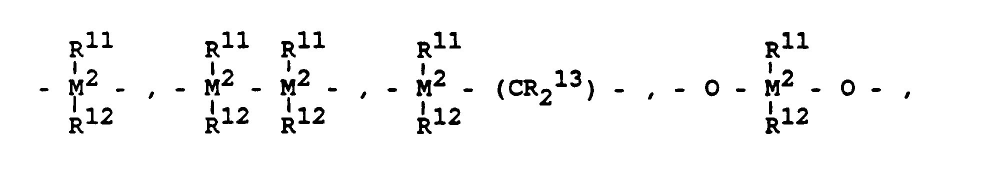 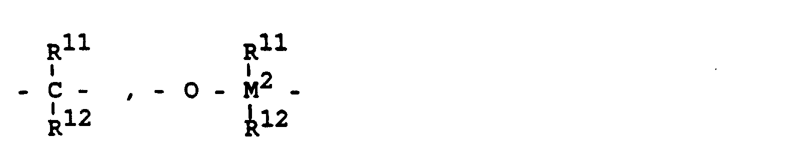 =BR¹¹, =AlR¹¹, -Ge-, -Sn-, -O-, -S-, =SO, =SO₂, =NR¹¹, =CO, =PR¹¹ oder =P(O)R¹¹, wobei R¹¹, R¹² und R¹³ gleich oder verschieden sind und ein Wasserstoffatom, ein Halogenatom, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹¹ und R¹² oder R¹¹ und R¹³ bilden jeweils zusammen mit den sie verbindenden Atomen einen Ring.

M² ist Silizium, Germanium oder Zinn, bevorzugt Silizium und Germanium.

R⁷ ist vorzugsweise =CR¹¹R¹², =SiR¹¹R¹², =GeR¹¹R¹², -O-, -S-, =SO, =PR¹¹ oder =P(O)R¹¹.

R⁸ und R⁹ sind gleich oder verschieden und haben die für R¹¹ genannte Bedeutung.

m und n sind gleich oder verschieden und bedeuten null, 1 oder 2, bevorzugt null oder 1, wobei m plus n null, 1 oder 2, bevorzugt null oder 1 ist.

Die Reste R¹⁰ sind gleich oder verschieden und haben die für R¹¹, R¹² und R¹³ genannte Bedeutung. Bevorzugt sind die Reste R¹⁰ Wasserstoffatome oder eine C₁-C₁₀-, vorzugsweise C₁-C₄-Alkylgruppe.

Somit sind die besonders bevorzugten Metallocene die Verbindungen der Formeln A, B und C 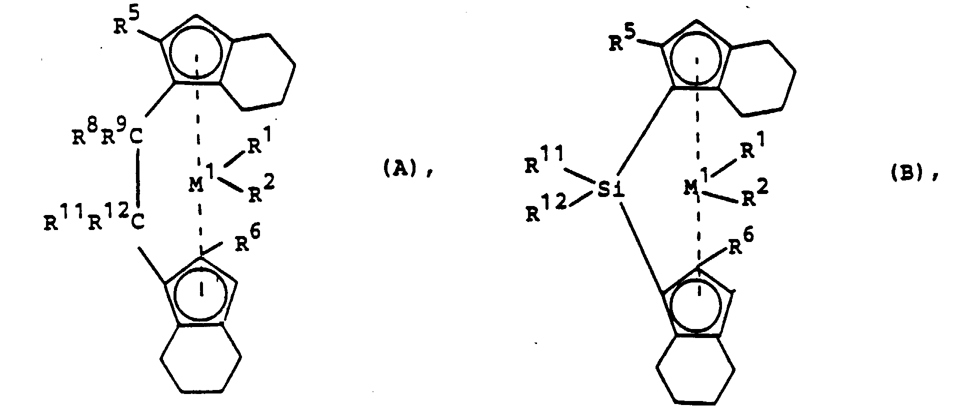 mit 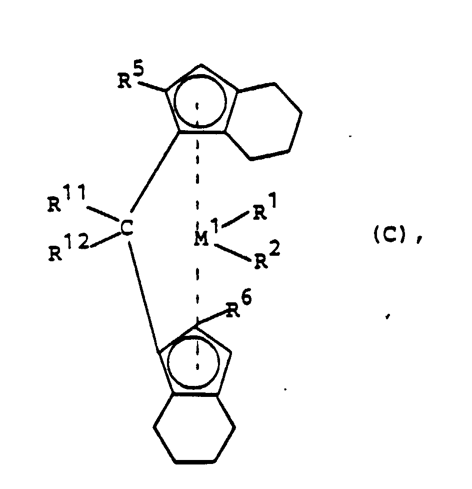 M¹ = Zr, Hf; R¹, R² = Methyl, Chlor; R⁵, R⁶ = Methyl, Ethyl, Trifluormethyl und R⁸, R⁹, R¹¹ und R¹² mit den obengenannten Bedeutungen, insbesondere die in den Ausführungsbeispielen aufgeführten Verbindungen I.

Die chiralen Metallocene werden als Racemat zur Herstellung von hochisotaktischen Poly-1-olefinen eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann.

Die Trennung der Stereoisomeren ist im Prinzip bekannt.

Die vorstehend beschriebenen Metallocene können beispielsweise nach folgendem Reaktionsschema hergestellt werden: 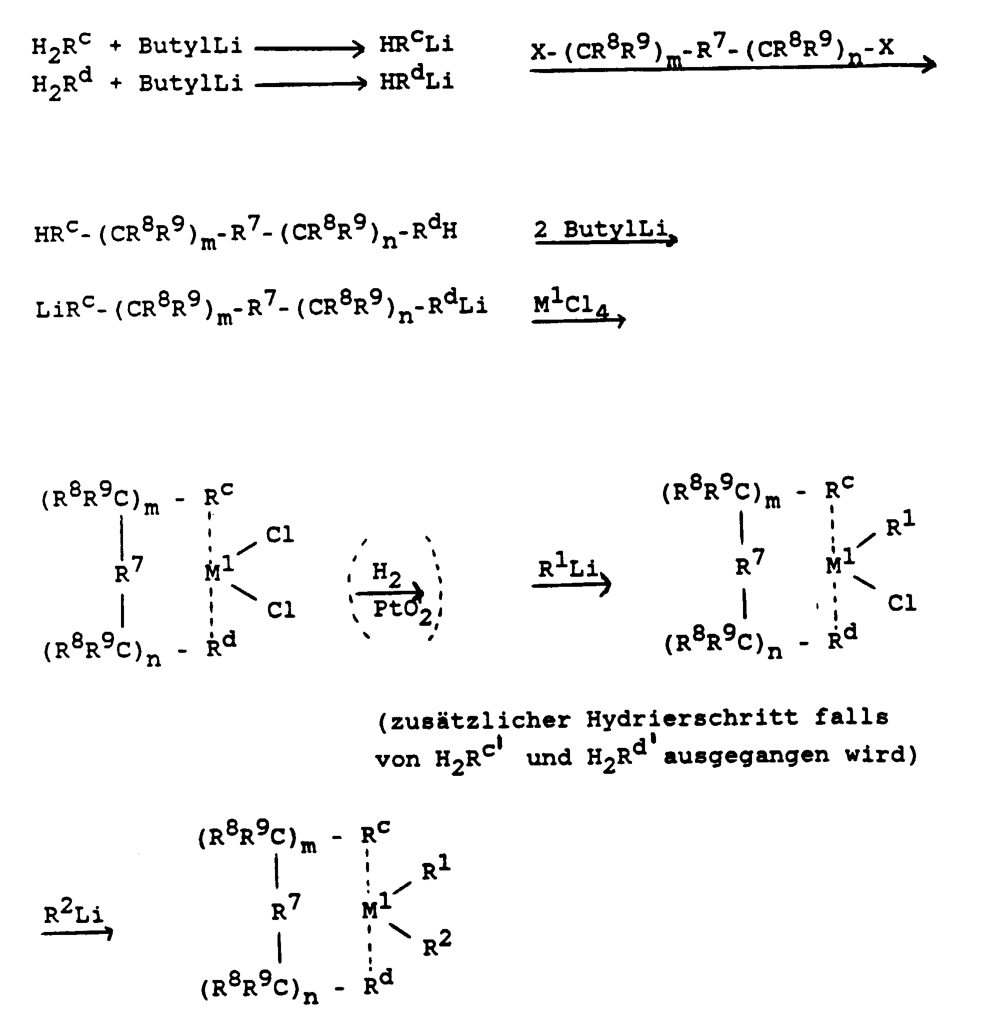 X = Cl, Br, I, O-Tosyl;

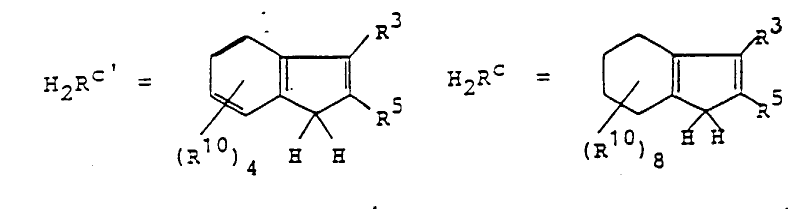

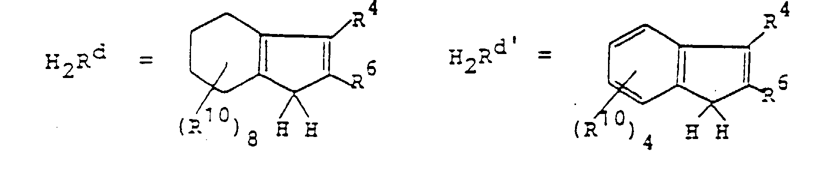

Die Herstellungsverfahren sind literaturbekannt; vgl. Journal of Organometallic Chem. 288 (1985) 63-67, EP-A 320 762 und die Ausführungsbeispiele.

Erfindungsgemäß wird als Cokatalysator ein Aluminoxan, bevorzugt der Formel (II) 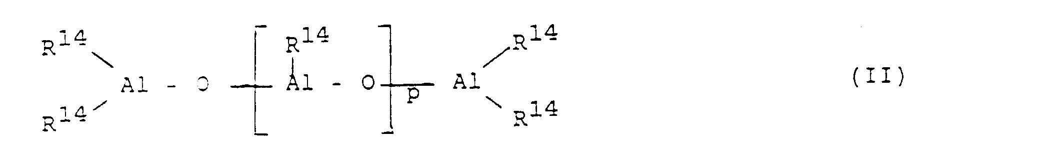 für den linearen Typ und/oder der Formel (III) 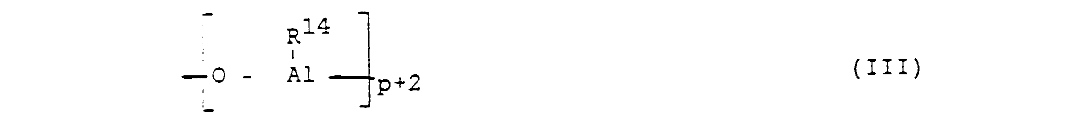 für den cyclischen Typ verwendet, wobei in den Formeln (II) und (III) die Reste R¹⁴ gleich oder verschieden sein können und eine C₁-C₆-Alkylgruppe, eine C₆-C₁₈-Arylgruppe oder Wasserstoff bedeuten-, und p eine ganze Zahl von 2 bis 50, bevorzugt 10 bis 35 bedeutet.

Bevorzugt sind die Reste R¹⁴ gleich und bedeuten Methyl, Isobutyl, Phenyl oder Benzyl, besonders bevorzugt Methyl.

Sind die Reste R¹⁴ unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R¹⁴) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R¹⁴ werden entsprechend der gewünschten Zusammensetzung zwei verschiedene Aluminiumtrialkyle (AlR₃ + AlR'₃) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x = 1,2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (vgl. EP-A 277 004 und die Herstellungsbeispiele E und F). Zur Entfernung von im Propylen vorhandener Katalysatorgifte ist eine Reinigung mit einem Aluminiumalkyl, beispielsweise AlMe₃ oder AlEt₃ vorteilhaft Diese Reinigung kann sowohl im Polymerisationssystem selbst erfolgen, oder das Propylen wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von -60 bis 200 °C, vorzugsweise 30 bis 80 °C, durchgeführt. Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 14 C-Atomen.

R^{a} und R^{b} können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere wird Propylen und Ethylen polymerisiert.

Als Molmassenregler wird, falls erforderlich, Wassertoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von 10⁻³ bis 10⁻⁸, vorzugweise 10⁻⁴ bis 10⁻⁷ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die erfindungsgemäßen Metallocene im technisch interessanten Temperaturbereich zwischen 30 und 80 °C Polymere mit hoher Molmasse, hoher Stereospezifität, enger Molmassendispersität und insbesondere einem hohen Schmelzpunkt, gleichbedeutend mit hoher Kristallinität und hoher Härte, erzeugen.

Die nachfolgenden Beispiele sollen die Erfindung näher erläutern.

Es bedeuten:
- VZ =: Viskositätszahl in cm³/g 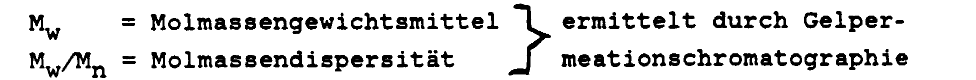
- II =: Isotaktischer Index (II = mm+1/2 mr) ermittelt durch ¹³C-NMR-Spektroakopie
- nᵢₛₒ =: Länge der isotaktischen Blöcke (in Propyleneinheiten) (nᵢₛₒ = 1+ 2 mm/mr) ermittelt durch ¹³C-NMR-Spektroskopie
Schmelzpunkte und Schmelzwärmen Δ H_{Schm} wurden mit DSC bestimmt (20 °C/min Aufheiz-/Abkühlgeschwindigkeit).

Der Schmelzindex MFI (230 °C, 5 kg Belastung) wurde nach DIN 53 735 gemessen und in g/10 min angegeben.

Synthese der in den Beispielen verwendeten Metallocene:

Die Herstellung der Chelatliganden LiR^{c}-(CR⁸R⁹)ₘ-R⁷-(CR⁸R⁹)ₙ-R^{d}Li durch Deprotonierung ist bekannt und erfolgt gemäß:

J. Am. Chem. Soc., 112 (1990) 2030-2031, ibid. 110 (1988) 6255-6256, ibid. 109 (1987), 6544-6545, J. Organomet. Chem., 322 (1987) 65-70, New. J. Chem. 14 (1990) 499-503, Bull. Soc. Chim., 1967, 2954.

Die als Ausgangssubstanzen dienenden Indenylverbindungen H₂R^{c} und H₂R^{d} bzw. H₂R^{c'} und H₂R^{d'} werden in Anlehnung an oder gemäß bekannten, Synthesevorschriften hergestellt:

J. Org. Chem., 49 (1984) 4226-4237, J. Chem. Soc., Perkin II, 1981, 403-408, J. Am. Chem. Soc., 106 (1984) 6702, J. Am. Chem. Soc., 65 (1943) 567, J. Med. Chem., 30 (1987) 1303-1308, Chem. Ber. 85 (1952) 78-85 und die Ausführungsbeispiele.

### Synthese der Ausgangssubstanzen

### I) Synthese von 2-Me-Inden

110,45 g (0,836 mol) 2-Indanon wurden in 500 ml Diethylether gelöst und 290 cm³ 3 n (0,87 mol) etherische Methylgrignardlösung so zugetropft, daß leicht refluxierte. Nach 2 h Kochen unter leichtem Rückfluß wurde auf eine Eis/Salzsäure-Mischung gegeben und mit Ammoniumchlorid ein pH von 2-3 eingestellt. Die organische Phase wurde abgetrennt und mit NaHCO₃ und Kochsalzlösung gewaschen und getrocknet. Es wurden 98 g Rohprodukt (2-Hydroxy-2-methylindan) erhalten, welches nicht weiter gereinigt wurde.

In 500 cm³ Toluol wurde dieses Produkt gelöst, mit 3 g p-Toluolsulfonsäure am Wasserabscheider bis zur Beendigung der Wasserabspaltung erhitzt, eingeengt, in Dichlormethan aufgenommen und über Silicagel filtriert und im Vakuum destilliert (80°C/10 mbar).
Ausbeute: 28,49 g (0,22 mol-26 %).

Die Synthese dieser Verbindung ist auch beschrieben in: C.F. Koelsch, P.R. Johnson, J. Am. Chem. Soc., 65 (1943) 567-573

### II) Synthese von (2-Me-Inden)₂SiMe₂

13 g (100 mmol) 2-Me-Inden wurde in 400 cm³ Diethylether gelöst und 62,5 cm³ 1,6 n (100 mmol) n-Butyllithium-n-Hexan-Lösung innerhalb 1 h unter Eiskühlung zugetropft und dann 1 h bei ∼35°C nachgerührt.

6,1 cm³ (50 mmol) Diemthyldichlorsilan wurden in 50 cm³ Et₂O vorgelegt und bei 0°C die Lithiosalzlösung innerhalb von 5 h zugetropft, über Nacht bei Raumtemperatur gerührt und über das Wochenende stehen gelassen.

Von abgesetztem Feststoff wurde abfiltriert und zur Trockne eingedampft. Nach Extraktion mit kleinen Portionen n-Hexan wurde filtriert und eingeengt. Es fielen 5,7 g (18,00 mmol) eines weißen Kristallisats an. Die Mutterlauge wurde eingeengt und dann säulenchromatographisch (n-Hexan/H₂CCl₂ 9:1 vol.) gereinigt, wobei nochmals 2,5 g (7,9 mmol-52 %) Produkt (als Isomerengemisch) anfielen.
r_{F} (SiO₂; n-Hexan/H₂CCl₂ 9:1 vol.) = 0,37

Das 1-H-NMR-Spektrum zeigt die für ein Isomerengemisch zu erwartenden Signale in Verschiebung und Integrationsverhältnis.

### III) Synthese von (2-Me-Ind)₂CH₂CH₂

3 g (23 mmol) 2-Me-Inden wurden in 50 cm³ THF gelöst und 14,4 cm³ 1,6 n (23,04 mmol) n-Butyllithium-n-Hexan-Lösung zugetropft und dann 1 h bei 65°C gerührt. Danach wurde 1 cm³ (11,5 mmol) 1,2-Dibromethan bei -78°C zugegeben, auf Raumtemperatur erwärmen lassen und 5 h gerührt. Nach Eindampfen wurde säulenchromatographisch gereinigt (SiO₂; n-Hexan/H₂CCl₂ 9:1 vol.).

Die produkthaltigen Fraktionen wurden vereinigt, eingedampft und in trockenem Ether aufgenommen, über MgSO₄ getrocknet, filtriert und das Lösemittel abgezogen.

Ausbeute: 1,6 g (5,59 mmol - 49 %) an Isomerengemisch
r_{F} (SiO₂; n-Hexan/H₂CCl₂ 9:1 vol.) = 0,46

Das 1-H-NMR-Spektrum entspricht der Erwartung für ein Isomerengemisch in Signalverschiebung und Integration.

### A) Synthese von rac-Dimethylsilyl(2-Me-4,5,6,7-tetrahydro-1-indenyl)₂zirkondichlorid

### a. Synthese der Vorstufe rac-Dimethylsilyl(2-Me-1-indenyl)₂zirkondichlorid

1,68 g(5,31 mmol) des Chelatliganden Dimethylsilyl(2-methylinden)₂ wurden in 50 cm³ THF gegeben und 663 cm³ einer 1,6 n (10,61 mmol) n-BuLi-n-Hexan-Lösung zugetropft. Die Zugabe erfolgte bei Umgebungstemperatur innerhalb 0,5 h. Nach 2 stündigem Rühren bei ca. 35°C wurde das Lösemittel im Vakuum abgezogen und der Rückstand mit n-Pentan verrührt, abfiltriert und getrocknet.

Das so erhaltene Dilithiosalz wurde bei -78°C zu einer Suspension von 1,24 g (5,32 mmol) ZrCl₄ in 50 cm³ CH₂Cl₂ gegeben und die Mischung 3 h bei dieser Temperatur gerührt. Nach Erwärmung auf Raumtemperatur über Nacht wurde eingedampft. Das 1-H-NMR-Spektrum zeigte neben dem Vorliegen von etwas ZrCl₄(thf)₂, ein rac-meso-Gemisch. Nach Verrühren mit n-Pentan und Trocknen wurde der feste, gelbe Rückstand in THF suspendiert, abfiltriert und NMR-spektroskopisch untersucht. Diese drei Arbeitsschritte wurden mehrmals wiederholt; schließlich wurden 0,35 g (0,73 mmol-14 %) Produkt erhalten, in dem die rac-Form, nach 1-H-NMR, auf mehr als 17:1 angereichert war.

Die Verbindung zeigte eine korrekte Elementaranalyse und die folgenden NMR-Signale (CDCl₃, 100 MHz) : δ = 1,25 (s, 6H, Si-Me); 2,18 (s, 6H, 2-Me), 6,8 (s, 2H, 3-H-Ind); 6,92-7,75 (m, 8H, 4-7-H-Ind).

### b. Synthese des Endprodukts

0,56 g (1,17 mmol) der Vorstufe rac-Dimethylsilyl(2-Me-1-indenyl)₂zirkondichlorid wurden in 70 cm³ CH₂Cl₂ gelöst und mit 40 mg PtO₂ in einen 200 cm³-NOVA-Rührautoklaven gegeben. Dann wurde 4 h bei Raumtemperatur unter einem H₂-Druck von 40 bar gerührt. Das Filtrat wurde eingedampft, mit Toluol/n-Hexan (1:2 vol) ausgelaugt, filtriert und eingedampft. Nach Zugabe von n-Pentan wurde die erhaltene Suspension abfiltriert und getrocknet. Die Ausbeute betrug 0,34 g (0,7 mmol-60 %). Das 1-H-NMR-Spektrum (CD₂Cl₂, 100 MHz) zeigte folgende Signale : δ = 0,90 (s, 6H, Me-Si); 1,43-1,93 (m, 8H, Indenyl-H); 2,10 (s, 6H, 2-Me); 2,44-3,37 (m, 8H, Indenyl-H); 6,05 (s, 2H, 3-H-Ind).

### B) Synthese von rac-Ethylen(2-Me-4,5,6,7-tetrahydro-1-indenyl)₂zirkondichlorid

### a. Synthese der Vorstufe rac-Ethylen(2-Me-1-indenyl)₂-zirkondichlorid

Zu 5,07 g (17,7 mmol) Ligand Ethylen(2-methylinden)₂ in 200 cm³ THF wurde bei Raumtemperatur 14,2 cm³ 2,5 n (35,4 mmol) n-BuLi-n-Hexan-Lösung innerhalb 1 h zugetropft und dann 3 h bei ca. 50 °C gerührt. Dabei geht ein zwischenzeitlich gebildeter Niederschlag wieder in Lösung. Über Nacht wurde stehengelassen.

6,68 g (17,7 mmol) Zrcl₄(thf)₂ in 250 cm³ THF wurden simultan mit obiger Dilithiosalzlösung zu ca. 50 cm³ THF bei 50 °C zugetropft und dann 20 h bei dieser Temperatur gerührt. Der Toluolextrakt des Eindampfrückstands wurde eingedampft. Nach Extraktion des Rückstands mit wenig THF wurde aus Toluol umkristallisiert. Dabei wurden 0,44 g (0,99 mmol-5,6 %) Produkt erhalten, wobei die rac-Form besser als 15:1 angereichert war.

Die Verbindung zeigte eine korrekte Elementaranalyse und die folgenden NMR-Signale (CDCl₃, 100 MHz) : δ = 2,08 (2s, 6H, 2-Me); 3,45-4,18 (m, 4H, -CH₂CH₂-), 6,65 (2H, 3-H-Ind); 7,05-7,85 (m, 8H, 4-7-H-Ind).

### b. Synthese des Endproduktes

0,56 g (1,25 mmol)
rac-Ethylen(2-Me-1-indenyl)₂zirkondichlorid wurden in 50 cm³ CH₂Cl₂ gelöst und mit 40 mg PtO₂ in einen 200 cm3-NOVA-Rührautoklaven gegeben. Dann wurde 2 h bei Raumtemperatur unter einem H₂-Druck von 40 bar gerührt. Es wurde zur Trockne eingedampft und im Hochvakuum bei ca. 100°C Badtemperatur sublimiert. Dabei fielen 0,46 g (1,01 mmol-81 %) Produkt an. Die Elementaranalyse war korrekt, das 1-H-NMR-Spektrum zeigt folgende Signale : δ = 1,46 - 1,92 (m, 8H, Indenyl-H), 2,14 (s, 6H, 2-Me); 2,49-2,73 (m, 6H, Indenyl-H und -CH₂CH₂-), 2,89-3,49 (m, 6H, Indenyl-H); 6,06 (s, 2H, 3-H-Ind).

### C) Synthese von rac-Dimethylsilyl(2-Me-4,5,6,7-tetrahydro-1-indenyl)₂zirkondimethyl

0,27 g (0,56 mmol) rac-Dimethylsilyl(2-Me-4,5,6,7-tetrahydro-1-indenyl)2zirkondichlorid wurden in 20 cm³ Et₂O gelöst, die Lösung auf -50 °C gekühlt und 1,1 cm³ einer 1,6 n (1,76 mmol) etherischen MeLi-Lösung zugetropft. Anschließend wurde bei 0 °C 1 h gerührt und nach Austausch des Lösemittels gegen n-Pentan 0,5 h bei Raumtemperatur gerührt. Der filtrierte Eindampfrückstand wurde im Hochvakuum sublimiert. Dabei wurden 0,21 g (0,47 mmol-83 %) Produkt erhalten, welches eine korrekte Elementaranalyse zeigte.

### D) Synthese von rac-Ethylen(2-Me-4,5,6,7-tetrahydro-1-indenyl)₂zirkondimethyl

0,18 g (0,40 mmol) rac-Ethylen(2-Me-4,5,6,7-tetrahydro-1-indenyl)2zirkondichlorid werden in 20 cm³ Et₂O gelöst, die Lösung auf -50 °C gekühlt und 1 cm³ einer 1,6 n (1,6 mmol) etherischen MeLi-Lösung zugetropft. Nach zweistündigem Rühren bei 0 °C wurde das Lösungsmittel gegen n-Hexan ausgetauscht und 0,5 h bei Umgebungstemperatur gerührt. Nach Filtrieren und Eindampfen wurde sublimiert. Es wurden 0,13 g (0,31 mmol-79 %) Produkt mit korrekter Elementaranalyse erhalten.

### E) Umsetzung von rac-Dimethylsilyl(2-Me-4,5,6,7-tetrahydro-1-indenyl)₂zirkondimethyl mit [Me₂NHPh][B(C₆F₅)₄]

0,15 g (0,33 mmol) rac-Dimethylsilyl(2-Me-4,5,6,7-tetrahydro-1-indenyl)₂zirkondimethyl wurden zu 0,25 g (0,31 mmol) [Me₂NHPh][B(C₆F₅)₄] in 30 cm³ Toluol gegeben. Nach einstündigem Rühren bei Raumtemperatur wurde die, inzwischen intensiv gefärbte Lösung eingedampft, der Rückstand mit wenig n-Pentan extrahiert und dann im Vakuum getrocknet.

Für die Polymerisation wurde ein aliquoter Teil der Reaktionsmischung verwendet.

### F) Umsetzung von rac-Ethylen(2-Me-4,5,6,7-tetrahydro-1-indenyl)₂zirkondimethyl mit [Bu₃NH][B(C₆H₅)₄]

0,12 g (0,29 mmol) rac-Ethylen(2-Me-4,5,6,7-tetrahydro-1-indenyl)₂zirkondimethyl wurden zu 0,14 g (0,28 mmol) [Bu₃NH][B(C₆H₅)₄] in 20 cm³ Toluol gegeben. Es wurde 1,5 h bei Raumtemperatur gerührt und die nun tief gefärbte Reaktionsmischung eingedampft, mit n-Pentan extrahiert und der etwas ölige Rückstand getrocknet.

Für die Polymerisation wurde ein aliquoter Teil der Raktionsmischung verwendet.

### Beispiel 1

Ein trockener 24 dm³-Reaktor wurde mit Stickstoff gespült und mit 12 dm³ flüssigem Propylen befüllt.

Dann wurden 35 cm³ toluolische Methylaluminoxanlösung (entsprechend 52 mmol Al, mittlerer Oligomerisierungsgrad n = 17) zugegeben und der Ansatz bei 30 °C 15 Minuten gerührt. Parallel dazu wurden 5,3 mg (0,011 mmol) rac-Dimethylsilyl(2-Me-4,5,6,7-tetrahydro-1-indenyl)₂zirkondichlorid in 13,5 cm³ toluolischer Methylaluminoxanlösung (20 mmol Al) gelöst und durch 15 minütiges Stehenlassen voraktiviert. Die Lösung wurde dann in den Reaktor gegeben und das Polymerisationssystem durch Aufheizung (innerhalb von 5 Minuten) auf 70 °C gebracht, und durch Kühlung 3 h bei dieser Temperatur gehalten. Die Aktivität des Metallocens betrug 50,3 kgPP/g Metallocen x h.

VZ = 37 cm³/g; M_{w} = 24 300 g/mol; M_{w}/Mₙ = 2,4;
II = 96,0 %; nᵢₛₒ = 62; Schmp.= 150 °C;ΔH_{Schm.} = 104 J/g.

### Beispiel 2

Beispiel 1 wurde wiederholt, es wurden jedoch 19,5 mg (0,04 mmol) des Metallocens eingesetzt, die Polymerisationstemperatur betrug 50 °C.
Die Aktivität des Metallocens war 18,8 kgPP/g Metallocen x h.

VZ = 72 cm³/g; M_{w} = 64 750 g/mol; M_{w}/Mₙ = 2,1;
II = 96,0 %; nᵢₛₒ = 64; Schmp.= 154 °C;ΔH_{Schm.} = 109,5 J/g.

### Beispiel 3

Beispiel 1 wurde wiederholt, es wurden jedoch 58,0 mg (0,12 mmol) des Metallocens verwendet, die Polymerisationstemperatur betrug 30 °C.
Die Aktivität des Metallocens war 9,7 kgPP/g Metallocen x h.

VZ = 152 cm³/g; M_{w} = 171 000 g/mol; M_{w}/Mₙ = 2,2;
II = 99,9 %; nᵢₛₒ = > 500; Schmp.= 160 °C;ΔH_{Schm.} = 103 J/g.

### Vergleichsbeispiele A - H

Die Beispiele 1 bis 3 wurden wiederholt, verwendet wurden jedoch die Metallocene Dimethylsilyl(2-Me-1-indenyl)₂-zirkondichlorid (Metallocen 1), Dimethylsilyl(4,5,6,7-tetrahydro-1-indenyl)₂zirkondichlorid (Metallocen 2) und Dimethylsilyl(1-indenyl)₂zirkondichlorid (Metallocen 3)

| Vergl.-beisp. | Metallocen | Polym.temp. [°C] | nᵢₛₒ | Schmp. [°C] | Δ H_{Schm.} [J/g] |
|---|---|---|---|---|---|
| A | 1 | 70 | 38 | 145 | 86,6 |
| B | 1 | 50 | 48 | 148 | 88,1 |
| C | 1 | 30 | 48 | 152 | 90,2 |
| D | 2 | 70 | 34 | 141 | - |
| E | 2 | 50 | 38 | 143 | - |
| F | 3 | 70 | 32 | 140 | - |
| G | 3 | 50 | 34 | 142 | - |
| H | 3 | 30 | 37 | 145 | - |

Der Vergleich der Vergleichsbeispiele F/G mit D/E belegt den positiven Einfluß des 4,5,6,7-Tetrahydroindenylliganden gegenüber Indenyl, die Vergleichsbeispiele F/G/H verglichen mit A/B/C zeigen den positiven Effekt der Substitution in 2-Position des Indenylliganden.

Verglichen mit den Beispielen 1 bis 3 führt jedoch nur die Kombination von Substitution in 2-Position verbunden mit dem Tetrahydroindenylsystem zu sehr hohen Schmelzpunkten und Schmelzwärmen und somit zu hoher Kristallinität und Härte der Polymeren.

### Beispiel 4

Beispiel 1 wurde wiederholt, es wurden jedoch 6,8 mg (0,015 mmol) Ethylen(2-Me-4,5,6,7-tetrahydro-1-indenyl)₂-zirkondichlorid eingesetzt.

Die Metallocenaktivität war 72,5 kgPP/g Metallocen x h.

VZ = 35 cm³/g; M_{w} = 20 750 g/mol; M_{w}/Mₙ = 1,9;
II = 94,5 %; nᵢₛₒ = 34; Schmp.= 141 °C;ΔH_{Schm.} = 92,4 J/g.

### Beispiel 5

Beispiel 4 wurde wiederholt, es wurden jedoch 28,1 mg (0,062 mmol) des Metallocens verwendet, die Polymerisationstemperatur betrug 50 °C.
Die Metallocenaktivität war 28,5 kgPP/g Metallocen x h.

VZ = 51 cm³/g; M_{w} = 28 200 g/mol; M_{w}/Mₙ = 2,2;
II = 94,8 %; nᵢₛₒ = 35; Schmp.= 143 °C;ΔH_{Schm.} = 97,9 J/g.

### Beispiel 6

Beispiel 4 wurde wiederholt, es wurden jedoch 50 mg (0,110 mmol) des Metallocens verwendet, die Polymerisationstemperatur betrug 30 °C.
Die Metallocenaktivität war 10,9 kgPP/g Metallocen x h.

VZ = 92 cm³/g; M_{w} = 93 800 g/mol; M_{w}/Mₙ = 2,2;
II = 95,5 %; nᵢₛₒ = 48; Schmp.= 151 °C;ΔH_{Schm.} = 99,0 J/g.

### Vergleichsbeispiele I - O

Die Beispiele 4 bis 6 wurden wiederholt, verwendet wurden jedoch die Metallocene Ethylen(1-indenyl)₂zirkondichlorid (Metallocen 4) und Ethylen(2-Me-1-indenyl)₂zirkondichlorid (Metallocen 5)

| Vergl.-beisp. | Metallocen | Polym.temp. [°C] | nᵢₛₒ | Schmp. [°C] | ΔH_{Schm.} [J/g] |
|---|---|---|---|---|---|
| I | 4 | 70 | 23 | 132 | 64,9 |
| K | 4 | 50 | 30 | 138 | 78,1 |
| L | 4 | 30 | 29 | 137 | 78,6 |
| M | 5 | 70 | 25 | 134 | 77,0 |
| N | 5 | 50 | 30 | 138 | 78,9 |
| O | 5 | 30 | 32 | 138 | 78,6 |

Der Vergleich der Vergleichsbeispiele I bis O mit den Beispielen 4 bis 6 belegt den Einfluß der Substitution in 2-Position verbunden mit der Verwendung des Tetrahydroindenylsystems. nᵢₛₒ, Schmelzpunkt und Schmelzwärme sind bei den Beispielen 4 - 6 jeweils deutlich höher - somit ist auch die Kristallinität und die Härte der Polymeren deutlich verbessert.

### Beispiel 7

Beispiel 2 wurde wiederholt, es wurden jedoch 15,0 mg (0,034 mmol) rac-Dimethylsilyl(2-Me-4,5,6,7-tetrahydro-1-indenyl)₂zirkondimethyl als Metallocen verwendet.
Die Aktivität des Metallocens betrug 21,9 kgPP/g Metallocen x h.

VZ = 75 cm³/g; M_{w} = 69 500 g/mol; M_{w}/Mₙ = 2,2;
II = 96,3 %; nᵢₛₒ = 66; Schmp.= 156 °C;ΔH_{Schm.} = 107 J/g.

### Beispiel 8

Beispiel 2 wurde wiederholt, es wurden jedoch 20,9 mg (0,05 mmol) rac-Ethylen(2-Me-4,5,6,7-tetrahydro-1-indenyl)₂zirkondimethyl als Metallocen verwendet.
Die Aktivität des Metallocens betrug 30,9 kgPP/g Metallocen x h.

VZ = 50 cm³/g; M_{w} = 30 500 g/mol; M_{w}/Mₙ = 2,1;
II = 95,0 %; nᵢₛₒ = 36; Schmp.= 144 °C; ΔH_{Schm}. = 98,5 J/g.

### Beispiel 9

Ein trockener 16 dm³-Reaktor wurde mit Stickstoff gespült. Dann wurden 1,6 dm³ (entsprechend 0,1 bar) Wasserstoff und schließlich 10 dm³ flüssiges Propylen sowie 29,2 cm³ toluolische Methylaluminoxanlösung (entsprechend 40 mmol Al, mittlerer Oligomerisierungsgrad war 17) zudosiert und bei 30 °C 10 Minuten gerührt. Parallel dazu wurden 17,0 mg (0,035 mmol) rac-Dimethylsilyl(2-Me-4,5,6,7-tetrahydro-1-indenyl)2zirkondichlorid in 11,2 cm³ toluolischer Methylaluminoxanlösung (20 mmol Al) gelöst und nach 10 Minuten in den Reaktor gegeben. Bei 30 °C wurde 3 h polymerisiert.
Die Metallocenaktivität betrug 12,0 kgPP/g Metallocen x h.

VZ = 110 cm³/g; M_{w} = 119 800 g/mol; M_{w}/Mₙ = 2,0;
II = 99,8 %; nᵢₛₒ = > 500; Schmp.= 162 °C; ΔH_{Schm}. = 110,8 J/g

### Beispiel 10

Es wurde verfahren wie in Beispiel 9, verwendet wurden jedoch 25,0 mg (0,055 mmol) rac-Ethylen(2-Me-4,5,6,7-tetrahydro-1-indenyl)₂zirkondichlorid.
Die Metallocenaktivität betrug 12,5 kgPP/g Metallocen x h.

VZ = 66 cm³/g; M_{w} = 62 400 g/mol; M_{w}/Mₙ = 2,2;
II = 96,7 %; nᵢₛₒ = 60; Schmp.= 153 °C; ΔH_{Schm.} = 104,7 J/g.

### Beispiel 11

Ein trockener 24 dm³-Reaktor wurde mit Stickstoff gespült und mit 12 dm³ flüssigem Propylen sowie mit 4,0 cm³ toluolischer Methylaluminoxanlösung (entsprechend 6 mmol Al, mittlerer Oligomerisierungsgrad war 17) befüllt und bei 30 °C 15 Minuten gerührt.

Dann wurden 6 cm³ der toluolischen Reaktionsmischung von rac-Dimethylsilyl(2-Me-4,5,6,7-tetrahydro-1-indenyl)₂zirkondimethyl und [Me₂NHPh][B(C₆F₅)₄], die in der Metallocensynthese Punkt E) beschrieben wurde (entsprechend 30 mg (0,068 mmol) Metallocen), in den Kessel dosiert. Bei 50 °C wurde 2 h polymerisiert.
Die Metallocenaktivität betrug 15,9 kgPP/g Metallocen x h.

VZ = 76 cm³/g; M_{w} = 70 900 g/mol; M_{w}/Mₙ = 2,3;
II = 96,1 %; nᵢₛₒ = 65; Schmp.= 155 °C;ΔH_{Schm.} = 104,4 J/g.

### Beispiel 12

Es wurde wie in Beispiel 11 verfahren, verwendet wurden jedoch 5 cm³ der toluolischen Reaktionsmischung von rac-Ethylen(2-Me-4,5,6,7-tetrahydro-1-indenyl)₂zirkondimethyl und [Bu₃NH][B(C₆H₅)₄], die in der Metallocensynthese Punkt F) beschrieben wurde (entsprechend 30 mg (0,073 mmol) Metallocen).
Die Metallocenaktivität betrug 24,0 kgPP/g Metallocen x h.

VZ = 50 cm³/g; M_{w} = 30 100 g/mol; M_{w}/Mₙ = 2,2;
II = 95,0 %; nᵢₛₒ = 37; Schmp.= 142 °C;ΔH_{Schm.} = 97,0 J/g.

### Beispiel 13

Beispiel 11 wurde wiederholt, statt der Methylaluminoxanlösung wurde jedoch eine toluolische Trimethylaluminiumlösung (8 mmol Al) verwendet.
Die Metallocenaktivität betrug 14,0 kgPP/g Metallocen x h.

VZ = 96 cm³/g; M_{w} = 64 100 g/mol; M_{w}/Mₙ = 2,2;
II = 96,0 %; nᵢₛₒ = 64; Schmp.= 154 °C;ΔH_{Schm.} = 107,3 J/g.

### Beispiel 14

Beispiel 13 wurde wiederholt, es wurde jedoch kein Trimethylaluminium in der Polymerisation verwendet.

Das eingesetzte Propylen wurde vor Zugabe in das Polymerisationssystem mit Triethylaluminium (1 mmol AlEt₃/dm³ Propylen) gereinigt, die Reaktionsprodukte und AlEt₃ wurden destillativ abgetrennt.
Die Metallocenaktivität betrug 15,0 kgPP/g Metallocen x h.

VZ = 70 cm³/g; M_{w} = 65 000 g/mol; M_{w}/Mₙ = 2,2;
II = 96,0 %; nᵢₛₒ = 64; Schmp.= 155 °C;ΔH_{Schm.} = 106,0 J/g.

### Beispiel 15

Ein trockener 16 dm³-Reaktor wurde mit Stickstoff gespült und bei 20°C mit 10 dm³ eines entaromatisierten Benzinschnittes mit dem Siedebereich 100 - 120 °C gefüllt.

Dann wurde der Gasraum des Kessels durch 5-maliges Aufdrücken von 2 bar Ethylen und Entspannen stickstoffrei gespült. Dann wurden 30 cm³ toluolische Methylaluminoxanlösung (entsprechend 45 mmol Al, Molmasse nach kryoskopischer Bestimmung 750 g/mol) zugegeben.

Unter Rühren wurde der Reaktorinhalt innerhalb von 15 Minuten auf 60 °C aufgeheizt und durch Zugabe von Ethylen wurde bei 250 Upm Rührgeschwindigkeit der Gesamtdruck auf 5 bar eingestellt.

Parallel dazu wurden 4,7 mg (0,01 mmol) rac-Ethylen-(2-Me-4,5,6,7-tetrahydro-1-indenyl)₂zirkondichlorid in 20 cm³ toluolischer Methyaluminoxanlösung gelöst und durch 15 minütiges Stehenlassen voraktiviert. Dann wurde die Lösung in den Reaktor gegeben, das Polymerisationssystem wurde auf eine Temperatur von 70 °C gebracht und durch entsprechende Kühlung 1 h bei dieser Temperatur gehalten. Der Gesamtdruck wurde während dieser Zeit durch entsprechende Zufuhr von Ethylen bei 5 bar gehalten.

Es wurden 550 g Polyethylen erhalten, entsprechend einer Metallocenaktivität von 117,0 kgPE/g Metallocen x h. Die Viskositätszahl betrug 491 cm³/g.

### Beispiel 16

Beispiel 3 wurde wiederholt, als Aluminoxan wurde jedoch Isobutylmethylaluminoxan in gleicher Al-Konzentration und -Menge verwendet. Isobutylmethylaluminoxan wurde durch Umsetzung einer Mischung von IsobutylAlMe₂ und AlMe₃ mit Wasser in Heptan erhalten (9 Mol.-% Isobutyl- und 91 Mol.-% Me-Einheiten).
Die Aktivität betrug 9,2 kgPP/g Metallocen x h, der Schmelzpunkt des Polymeren lag bei 159 °C.

### Beispiel 17

Beispiel 3 wurde wiederholt, als Aluminoxan wurde jedoch Hydridomethylaluminoxan in gleicher Al-Konzentration und Menge verwendet. Hydridomethylaluminoxan wurde durch Umsetzung von Me₂AlH mit Wasser in Toluol erhalten (enthielt 12 Mol.-% H- und 88 Mol.-% Me-Einheiten). Die Aktivität betrug 6,2 kgPP/g Metallocen x h, der Schmelzpunkt des Polymeren lag bei 158 °C.

### Beispiel 18

Ein trockener 70-dm³-Reaktor wurde mit Stickstoff und Propylen gespült und mit 40 dm³ flüssigem Propylen befüllt. Dann wurden 180 cm³ toluolische Methylaluminoxanlösung (entsprechend 270 mmol Aluminoxan, mittlerer Oligomerisierungsgrad p = 17) zugegeben und der Ansatz bei 30 °C 15 Minuten gerührt. Anschließend wurden 50 g Ethylen eindosiert. Parallel dazu wurden 10,6 mg (0,02 mmol) rac-Dimethylsilyl (2-methyl-4,5,6,7-tetrahydro-1-indenyl)₂ zirkondichlorid in 20 cm³ toluolischer Methylaluminoxanlösung (30 mmol Al) gelöst und durch 15 minütiges Stehenlassen voraktiviert.
Die Lösung wurde dann in den Reaktor gegeben und dieser innerhalb von 10 Minuten auf die Polymerisationstemperatur von 60 °C gebracht. Es wurden 4 h polymerisiert und dabei weitere 100 g Ethylen kontinuierlich zudosiert. Die Polymerisation wurde mit CO₂-Gas gestoppt, überschüssiges Monomer abgegast und das Produkt bei 80 °C im Hochvakuum getrocknet. Man erhielt 2,25 kg statistisches Propylen-Ethylen-Copolymer mit 6,2 Gew.-% Ethylengehalt. VZ = 82 cm³/g, M_{w} = 74500 g/mol, M_{w}/Mₙ = 2,2, weitgehend isolierter Ethyleneinbau mit einer mittleren C₂-Blocklänge < 1,2 (NMR, ¹³C).

### Beispiel 19

Beispiel 1 wurde mit 65 °C Polymerisationstemperatur wiederholt, nach 3 h Polymerisation (Stufe 1), wurden jedoch zusätzlich 500 g Ethylen verteilt über weitere 3 h Polymerisationszeit zugegeben (Stufe 2). Die Aktivität des Metallocens betrug 78,6 kg C₂-C₃-Blockcopolymer/g Metallocen x h.
Das Copolymere enthielt 18,4 % Ethylen. Der extrahierbare Weichphasengehalt (C₂/C₃-Kautschuk) belief sich auf 60 %. Das Produkt weist eine sehr gute Tieftemperatur-Schlagzähigkeit auf (aₖᵥ nach DIN 53453, Spritzkörper) bei 23 °C, 0 °C und -20 °C: ohne Bruch, -40 °C:62,0 mJ mm⁻². Die Kugeldruckhärte (nach DIN 53456, Preßkörper, 3 h bei 140 °C getempert, 132 N) betrug 36 Nmm⁻².

Abkürzungen:
Me = Methyl, Et = Ethyl, Bu = Butyl, Ph = Phenyl,
THF = Tetrahydrofuran, PE = Polyethylen, PP = Polypropylen

## Patentansprüche

1. Verfahren zur Herstellung eines Olefinpolymers durch Polymerisation oder Copolymerisation eines Olefins der Formel R^{a}-CH=CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, welcher aus einem Metallocen als Übergangsmetallverbindung und einem Cokatalysator besteht, wobei der Cokatalysator ein Aluminoxan und/oder eine salzartige Verbindung der Formel RₓNH₄₋ₓBR'₄ oder der Formel R₃PHBR '₄ ist, worin x = 1,2 oder 3 ist, R = Alkyl oder Aryl gleich oder verschieden sind und R' = Aryl sind, das auch fluoriert oder teilfluoriert sein kann, dadurch gekennzeichnet, daß das Metallocen eine Verbindung der Formel I ist, 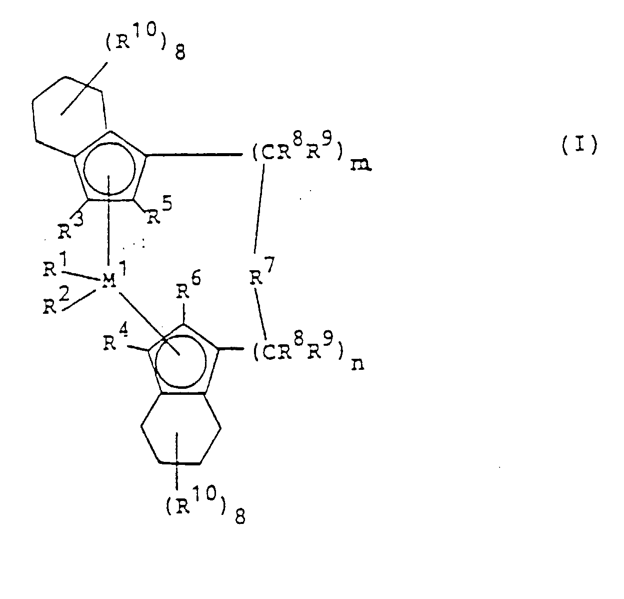 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁵, -SR¹⁵, -OSiR₃¹⁵, -SiR₃¹⁵ oder -PR₂¹⁵-Rest bedeuten, worin R¹⁵ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind,
R⁷ 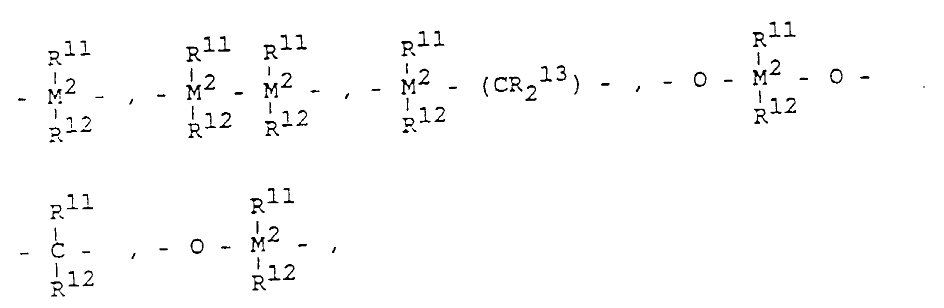 =BR¹¹, =AlR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstoffatom, ein Halogenatom eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-Cₗ₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ und R⁹ gleich oder verschieden sind und die für R¹¹ genannte Bedeutung haben,
m und n gleich oder verschieden sind und null, 1 oder 2 sind, wobei m plus n null, 1 oder 2 ist, und
die Reste R¹⁰ gleich oder verschieden sind und die für R¹¹, R¹² und R¹³ genannte Bedeutung haben.

2. Verfahren gemäß Anspruch 1, dadurch gekennzeichnet, daß in Formel I M¹ Zr oder Hf, R¹ und R² gleich oder verschieden sind und Methyl oder Chlor, R³ und R⁴ Wasserstoff, R⁵ und R⁶ gleich oder verschieden sind und Methyl, Ethyl oder Trifluormethyl, R⁷ einen Rest 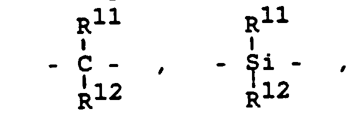 n plus m null oder 1 und R¹⁰ Wasserstoff bedeuten.

3. Verfahren gemäß Anspruch 1 oder 2, dadurch gekennzeichnet, daß die Verbindung der Formel I rac-Dimethylsilyl(2-methyl-4,5,6,7-tetrahydro-1-indenyl)₂-zirkondichlorid, rac-Ethylen(2-methyl-4,5,6,7-tetrahydro-1-indenyl)₂-zirkondichlorid, rac-Dimethylsilyl(2-methyl-4,5,6,7-tetrahydro-1-indenyl)₂zirkondimethyl oder rac-Ethylen(2-methyl-4,5,6,7-tetrahydro-1-indenyl)₂-zirkondimethyl ist.

4. Verfahren gemäß einem oder mehreren der Ansprüche 1 bis 3, worin der Cokatalysator ein Aluminoxan der Formel (II) 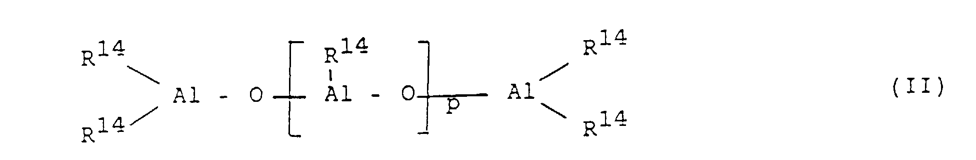 für den linearen Typ und/oder der Formel III 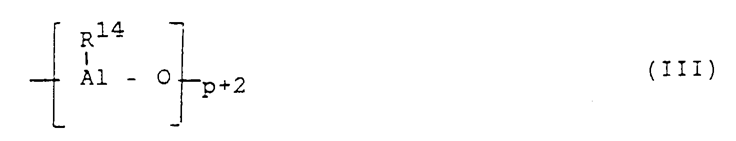 für den cyclischen Typ ist,
wobei in den Formeln (II) und (III) die Reste R¹⁴ gleich oder verschieden sein können und eine C₁-C₆-Alkylgruppe, eine C₆-C₁₈-Arylgruppe oder Wasserstoff bedeuten und p eine ganze Zahl von 2 bis 50 bedeutet.

5. Verfahren gemäß einem oder mehreren der Ansprüche 1 bis 4, worin das Metallocen auf einen Träger aufgebracht ist.

6. Verfahren gemäß einem oder mehreren der Ansprüche 1 bis 5, worin das Metallocen vorpolymerisiert ist.

7. Verwendung eines Katalysators, welcher aus einem Metallocen der Formel I gemäß einem oder mehreren der Ansprüche 1 bis 3 als übergangsmetallverbindung und einem Cokatalysator besteht, wobei der Cokatalysator ein Aluminoxan und/oder eine salzartige Verbindung der Formel RₓNH₄₋ₓBr'₄ oder der Formel R₃PHBR'₄ ist, worin x = 1,2 oder 3 ist, R = Alkyl oder Aryl gleich oder verschieden sind und R' = Aryl sind, das auch fluoriert oder teilfluoriert sein kann, zur Polymerisation oder Copolymerisation eines Olefins der Formel R^{a}-CH=CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenten Atomen einen Ring bilden können

## Claims

1. A process for the preparation of an olefin polymer by polymerization or copolymerization of an olefin of the formula R^{a}-CH=CH-R^{b}, in which R^{a} and R^{b} are identical or different and are a hydrogen atom or a hydrocarbon radical having 1 to 14 carbon atoms, or R^{a} and R^{b}, together with the atoms binding them, may form a ring, at a temperature of -60 to 200°C, at a pressure of 0.5 to 100 bar, in solution, in suspension or in the gas phase, in the presence of a catalyst which is composed of a metallocene as a transition metal compound and a cocatalyst, the cocatalyst being an aluminoxane and/or a salt-like compound of the formula RₓNH₄₋ₓBR '₄ or of the formula R₃PHBR'₄, in which x is 1, 2 or 3, each R are identical or different alkyl or aryl and R' are aryl, which may also be fluorinated or partially fluorinated, wherein the metallocene is a compound of the formula I 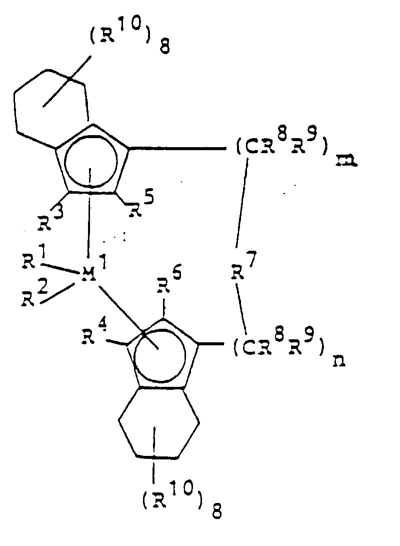 in which
M¹ is a metal of group IVb, Vb or VIb of the Periodic Table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a hydrogen atom, a halogen atom, a C₁-C₁₀-alkyl group which may be halogenated, a C₆-C₁₀-aryl group, a -NR₂¹⁵, -SR¹⁵, -OSiR₃¹⁵, -SiR₃¹⁵ or -PR₂¹⁵ radical, in which R¹⁵ is a halogen atom, a C₁-C₁₀-alkyl group or a C₆-C₁₀-aryl group,
R⁵ and R⁶ are identical or different and have the meaning stated for R³ and R⁴, with the proviso that R⁵ and R⁶ are not hydrogen,
R⁷ is 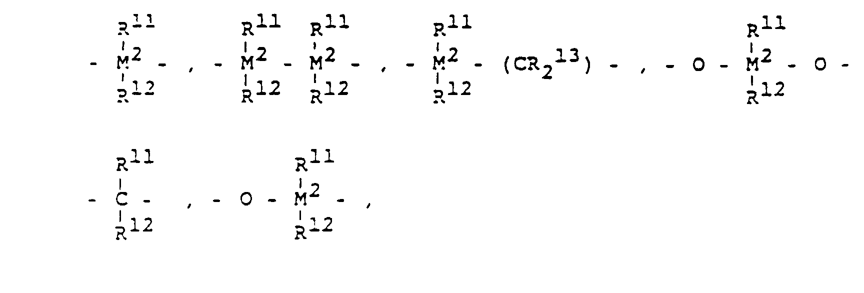 =BR¹¹, =AlR¹¹, -Ge-, -Sn-, -O-, =SO₂, =NR¹¹, =CO, =PR¹¹ or =P(O)R¹¹,
where
R¹¹, R¹² and R¹³ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹² or R¹¹ and R¹³, together with the atoms binding them, each form a ring,
M² is silicon, germanium or tin,
R⁸ and R⁹ are identical or different and have the meaning stated for R¹¹,
m and n are identical or different and are zero, 1 or 2, m plus n being zero, 1 or 2, and
the radicals R¹⁰ are identical or different and have the meaning stated for R¹¹, R¹² and R¹³.

2. The process as claimed in claim 1, wherein, in formula I, M¹ is Zr or Hf, R¹ and R² are identical or different and are methyl or chlorine, R³ and R⁴ are hydrogen, R⁵ and R⁶ are identical or different and are methyl, ethyl or trifluoromethyl, R⁷ is a radical 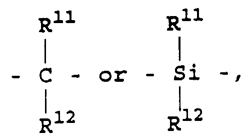 n plus m is zero or 1 and R¹⁰ is hydrogen.

3. The process as claimed in claim 1 or 2, wherein the compound of the formula I is rac-dimethylsilyl(2-methyl-4,5,6,7-tetrahydro-1-indenyl)₂zirconium dichloride, rac-ethylene (2-methyl-4,5,6,7-tetrahydro-1'-indenyl)₂zirconium dichloride, rac-dimethylsilyl-(2-methyl-4,5,6,7-tetrahydro-1-indenyl)₂zirconiumdimethyl or rac-ethylene(2-methyl-4,5,6,7-tetrahydro-1-indenyl)₂zirconiumdimethyl.

4. The process as claimed in one or more of claims 1 to 3, in which the cocatalyst is an aluminoxane of the formula (II) 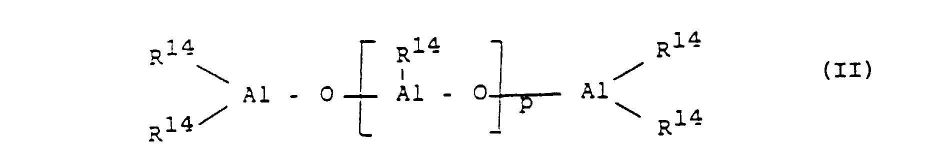 for the linear type and/or of the formula III 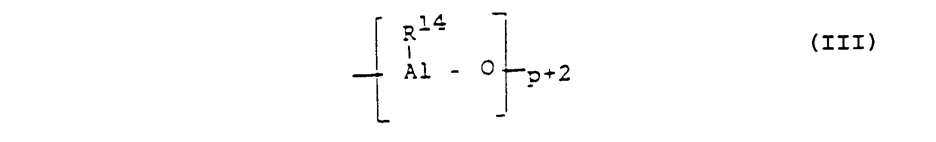 for the cyclic type,
where, in the formulae (II) and (III), the radicals R¹⁴ may be identical or different and are a C₁-C₆-alkyl group, a C₆-C₁₈-aryl group or hydrogen and p is an integer of from 2 to 50.

5. The process as claimed in one or more of claims 1 to 4, in which the metallocene is applied to a carrier.

6. The process as claimed in one or more of claims 1 to 5, in which the metallocene is prepolymerized.

7. The use of a catalyst which is composed of a metallocene of the formula I as claimed in one or more of claims 1 to 3 as a transition metal compound and a cocatalyst, the cocatalyst being an aluminoxane and/or a salt-like compound of the formula RₓNH₄₋ₓBR'₄ or of the formula R₃PHBR'₄, in which x is 1, 2 or 3, each R are identical or different alkyl or aryl and R' are aryl, which may a'lso be fluorinated or partially fluorinated, for the polymerization or copolymerization of an olefin of the formula R^{a}-CH=CH-R^{b}, in which R^{a} and R^{b} are identical or different and are a hydrogen atom or a hydrocarbon radical having 1 to 14 carbon atoms, or R^{a} and R^{b}, together with the atoms binding them, may form a ring.

## Revendications

1. Procédé pour préparer un polymère oléfinique par polymérisation ou copolymérisation d'une oléfine de for₌ mule R^{a}-CH=CH-R^{b}, dans laquelle R^{a} et R^{b} sont identiques ou différents et représentent chacun un atome d'hydrogène ou un radical hydrocarboné ayant de 1 à 14 atomes de carbone, ou bien Ra et R^{b}, avec les atomes qui les relient, peuvent former un noyau, à une température de -60 à 200°C, sous une pression de 0,5 à 100 bar, en solution, en suspension ou en phase gazeuse, en présence d'un catalyseur, qui est constitué d'un métallocène comme composé d'un métal de transition, ainsi que d'un co-catalyseur, le co-catalyseur pouvant être un aluminoxane et/ou d'un composé de type sel, de formule RₓNH₄₋ₓBR'₄, ou encore de formule R₃PHBR'₄, où x vaut 1, 2 ou 3, les radicaux R sont des groupes alkyle ou aryle identiques ou différents, et les radicaux R' sont des groupes aryle, qui peuvent aussi être fluorés ou partiellement fluorés, caractérisé en ce que le métallocène est un composé de formule (I) 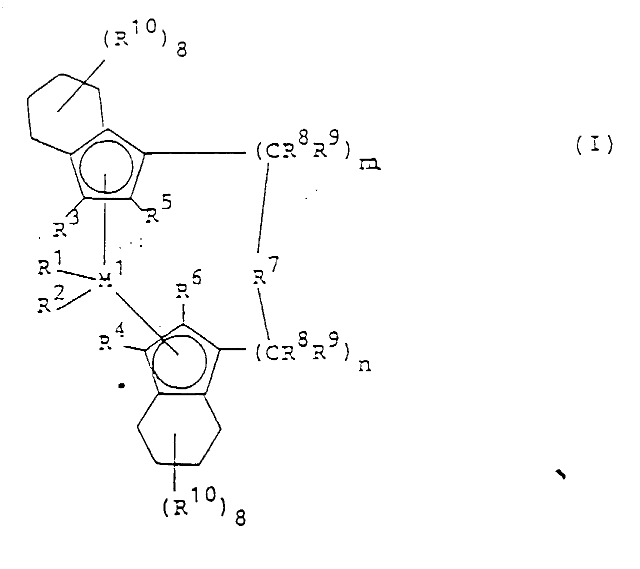 dans laquelle
M¹ est un métal du Groupe IVb, Vb ou VIb du système périodique,
R¹ et R² sont identiques ou différents et représentent chacun un atome d'hydrogène, un groupe alkyle en C₁-C₁₀, un groupe alcoxy en C₁-C₁₀, un groupe aryle en C₆-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène,
R³ et R⁴ sont identiques ou différents et représentent chacun un atome d'hydrogène, un atome d'halogène, un groupe alkyle en C₁-C₁₀ pouvant être halogéné, un groupe aryle en C₆-C₁₀, un radical -NR₂¹⁵, -SR¹⁵, -OSiR₃¹⁵, -SiR₃¹⁵ ou -PR₂¹⁵, où R¹⁵ est un atome d'halogène, un groupe alkyle en C₁-C₁₀ ou un groupe aryle en C₆-C₁₀,
R⁵ et R⁶ sont identiques ou différents et ont les significations données pour R³ et R⁴, du moment que R³ et R⁴ ne sont pas des hydrogènes,
R⁷ est 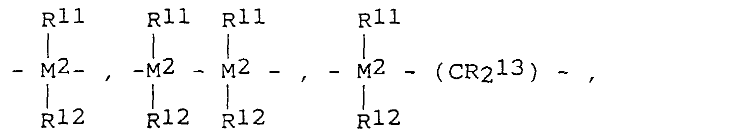 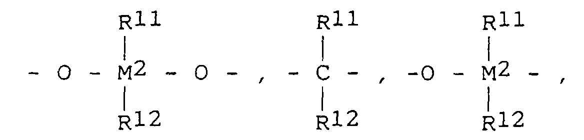 =BR¹¹, =AlR¹¹, -Ge-, -Sn-, -O-, -S-, =SO, =SO₂, =NR¹¹, =CO, =PR¹¹ ou =P(O)R¹¹,
où
R¹¹, R¹² et R¹³ sont identiques ou différents et représentent chacun un atome d'hydrogène, un atome d'halogène, un groupe alkyle en C₁-C₁₀, un groupe fluoralkyle en C₁-C₁₀, un groupe aryle en C₆-C₁₀, un groupe fluoraryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀, un groupe alkylaryle en C₇-C₄₀, ou bien R¹¹ et R¹², ou R¹¹ et R¹³, forment un noyau avec les atomes qui les relient,
M² est le silicium, le germanium ou l'étain,
R⁸ et R⁹ sont identiques ou différents et ont les significations données pour R¹¹,
m et n sont identiques ou différents et valent chacun zéro, 1 ou 2, la somme de m et de n valant 0, 1 ou 2, et
les radicaux R¹⁰ sont identiques ou différents et ont les significations données pour R¹¹, R¹² et R¹³.

2. Procédé selon la revendication 1, caractérisé en ce que, dans la formule (I), M¹ est Zr ou Hf, R¹ et R² sont identiques ou différents et représentent des radicaux méthyle ou chloro, R³ et R⁴ sont des hydrogènes, R⁵ et R6 sont identiques ou différents et représentent chacun le radical méthyle, éthyle ou trifluorométhyle, R⁷ est un radical 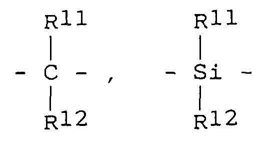 la somme de n et m vaut zéro ou 1, et R¹⁰ est un hydrogène.

3. Procédé selon la revendication 1 ou 2, caractérisé en ce que le composé de formule (I) est le dichlorure de rac-diméthylsilyl(2-méthyl-4,5,6,7-tétrahydro-1-indényl)₂zirconium, le dichlorure de rac-éthylène(2-méthyl-4,5,6,7-tétrahydro-1-indényl)₂-zirconium, le rac-diméthylsilyl(2-méthyl-4,5,6,7-tétrahydro-1-indényl)₂-zirconiumdiméthyle ou le rac-éthylène(2-méthyl-4,5,6,7-tétrahydro-1-indényl)2-zirconiumdiméthyle.

4. Procédé selon l'une ou plusieurs des revendications 1 à 3, dans lequel le co-catalyseur est un aluminoxane de formule (II) 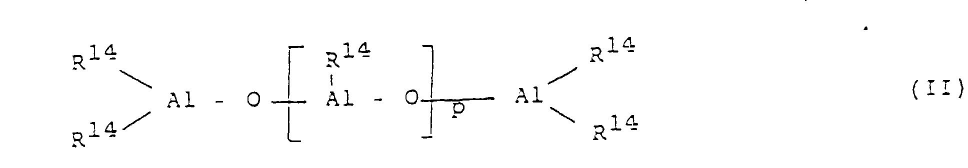 pour le type linéaire et/ou de formule (III) 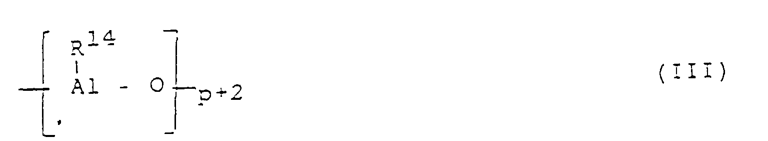 pour le type cyclique,
où, dans les formules (II) et (III), les radicaux R¹⁴ peuvent être identiques ou différents et représentent chacun un groupe alkyle en C₁-C₆, un groupe aryle en C₆-C₁₈ ou un hydrogène, et p est un nombre entier de 2 à 50.

5. Procédé selon l'une ou plusieurs des revendications 1 à 4, dans lequel le métallocène est appliqué sur un support.

6. Procédé selon l'une ou plusieurs des revendications 1 à 5, dans lequel le métallocène est prépolymérisé.

7. Utilisation d'un catalyseur constitué d'un métallocène de formule (I) selon l'une ou plusieurs des revendications 1 à 3, comme composé d'un métal de transition, et d'un co-catalyseur, le co-catalyseur pouvant être un aluminoxane et/ou d'un composé de type sel, de formule RₓNH₄₋ₓBR'₄, ou encore de formule R₃PHBR'₄, où x vaut 1, 2 ou 3, les radicaux R sont des groupes alkyle ou aryle identiques ou différents, et les radicaux R' sont des groupes aryle, qui peuvent aussi être fluorés ou partiellement fluorés, pour polymériser ou copolymériser une oléfine de formule R^{a-}CH=CH-Rb_{,} où R^{a} et R^{b} sont identiques ou différents et représentent chacun un atome d'hydrogène ou un radical hydrocarboné ayant de 1 à 14 atomes de carbone, ou encore R^{a} et R^{b} peuvent former un noyau avec les atomes qui les relient.
